# DEMANDE DE BREVET EUROPEEN

(11) **EP 1 201 674 A1**
(43) Date de publication de la demande: **02.05.2002**
(21) Numéro de dépôt: 01402743.7
(22) Date de dépôt: 23.10.2001
(51) Int. Cl.: C07F 9/40

(54) **Procédé de préparation de (meth)acrylate de (dialkylphosphono)alkyle**

(30) Priorité: 24.10.2000 FR 0013618
(71) Demandeur: Atofina, 92800 Puteaux (FR)
(72) Inventeur: Riondel, Alain, 57600 Forbach (FR); Pirri, Rosangela, 64121 Montardon (FR); Jeanmaire, Thomas, 34140 Bouzigues (FR)
(74) Mandataire: Cabinet Hirsch

(57) **Abrégé**

L'invention concerne un procédé permettant la préparation d'un (méth)acrylate de (dialkylphosphono)alkyle, répondant à la formule : 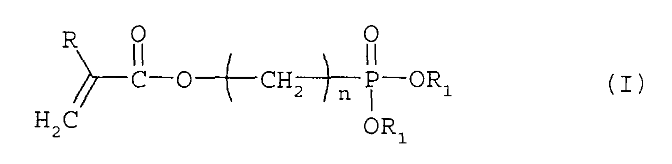 par réaction d'un (méth)acrylate d'alkyle A de formule 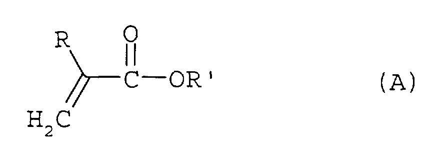 avec un alcool dialkylphosphoné B de formule 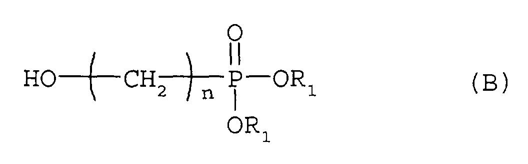 en présence d'un catalyseur comprenant de l'acétyl acétonate de zirconium.

## Description

La présente invention concerne un procédé permettant la préparation d'un (méth)acrylate de (dialkylphosphono)alkyle, en particulier du méthacrylate de (diméthylphosphono)éthyle.

Le brevet américain US 3 030 347 a trait à des copolymères à base de (méth)acrylate de dialkyl-phosphono alkyle et d'un monomère copolymérisable avec ce composé. Le (méth)acrylate de dialkyl-phosphono alkyle est préparé par addition d'un phosphite d'alkyle E sur un aldéhyde, suivie d'une réaction avec du chlorure de (méth)acroyle.

Ce dernier réactif présente l'inconvénient de n'être pas disponible à l'échelle industrielle et de générer des effluents importants lors de sa mise en oeuvre.

Il n'existe donc pas à ce jour de procédé permettant de préparer de façon satisfaisante des (méth)acrylates de (dialkylphosphono)alkyle à l'échelle industrielle, en vue, notamment, de les utiliser dans des procédés industriels de polymérisation.

La présente invention a donc pour objet un procédé de préparation de (méth)acrylate de (dialkylphosphono)alkyle qui puisse être mis en oeuvre aisément à l'échelle industrielle.

Plus précisément, la présente invention a pour premier objet un procéde de préparation d'un (méth)acrylate de (dialkylphosphono)alkyle répondant à la formule : 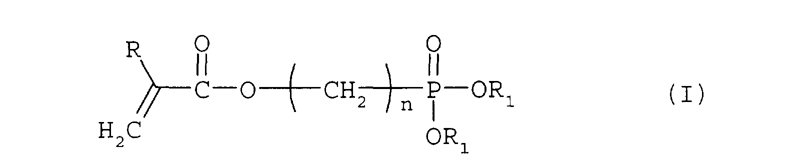 dans laquelle :
R est un hydrogène ou un groupement méthyle
R₁ représente un groupement alkyle ayant de 1 à 6 atomes de carbone, notamment 1 ou 2 atomes de carbone;
n est un entier de 1 à 3.

Ce procédé comprend la réaction d'un (méth)acrylate d'alkyle A de formule 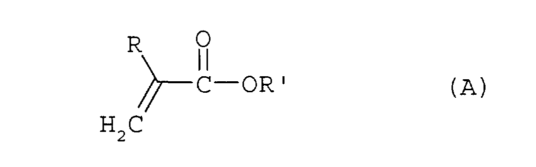 dans laquelle :
R est un atome d'hygrogène ou un groupement méthyle ;
R'est un groupement alkyle ayant de 1 à 4 atomes de carbone
avec un alcool dialkylphosphoné B de formule 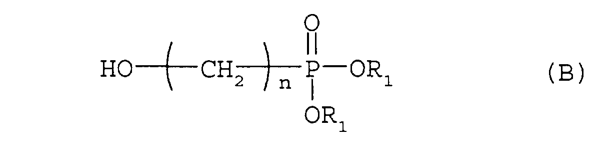 dans laquelle R₁ et n ont les significations données ci-dessus.

Un tel procédé a donc l'avantage de recourir à une transestérification, ce qui évite de faire appel à des produits peu disponibles dans le commerce ou à toxicité élevée. En outre, il permet de préparer à faible coût les (méth)acrylates de (dialkylphosphono)alkyle.

Un second objet de la présente invention est un procédé de polymérisation, dans lequel on polymérise le monomère phosphoné obtenu par le procédé de préparation selon l'invention avec au moins un (méth)acrylate d'alkyle en C₁ à C₄.

Selon un mode de réalisation préféré du procédé de polymérisation de l'invention, le monomère phosphoné est mis en oeuvre pendant la polymérisation sous forme de solution de ce monomère dans le (méth)acrylate d'alkyle A ayant servi à sa préparation.

D'autres caractéristiques et avantages de l'invention vont maintenant être décrits en détail dans l'exposé qui suit, et illustrés par la figure annexée qui représente l'appareillage utilisé pour la mise en oeuvre du procédé selon l'invention.

### PREPARATION DU (METH)ACRYLATE DE (DIALKYLPHOSPHONO)ALKYLE

### 1) Réactifs

### (Méth)acrylate d'alkyle A

Selon l'invention, on part d'un (méth)acrylate d'alkyle A de formule : 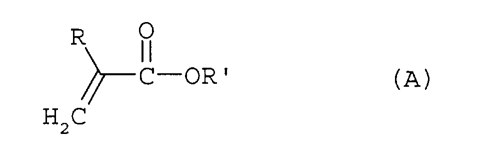 dans laquelle :
R est un atome d'hygrogène ou un groupement méthyle ;
R' est un groupement alkyle ayant de 1 à 4 atomes de carbone.

De préférence, le groupement R est le groupement méthyle et le groupement R' est le groupement méthyle ou éthyle, notamment méthyle.

Comme (méth)acrylate d'alkyle A, on peut donc citer les acrylates de méthyle, d'éthyle, de propyle, de butyle et les méthacrylates de méthyle, d'éthyle, de propyle et de butyle.

Le (méth)acrylate d'alkyle A est donc mis à réagir avec l'alcool dialkylphosphoné B.

### Alcool dialkylphosphoné B

Ce composé a pour formule 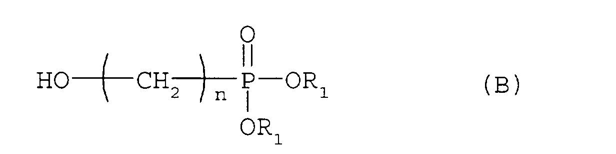 dans laquelle
R₁ représente un groupement alkyle ayant de 1 à 6 atomes de carbone ; et
n est un entier de 1 à 3.

De préférence, R₁ comporte de 1 à 3 atomes de carbone. Plus préférentiellement encore, R₁ est un groupement méthyle ou éthyle.

Pour obtenir un alcool dialkylphosphoné B dans lequel n vaut 2 ou 3, on effectue, de façon classique, une réaction radicalaire entre un phosphite d'alkyle C de formule 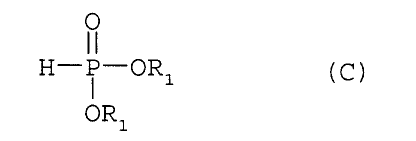 dans laquelle R₁ a la signification donnée ci-dessus,
avec un ester insaturé D de formule
et un ester insaturé D de formule 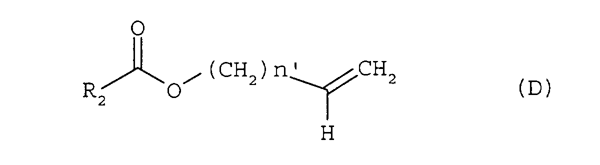 dans laquelle
R₂ est un groupement alkyle comportant de 1 à 4 atomes de carbone, de préférence un méthyle
n' vaut 0 ou 1 ;
puis on saponifie l'intermédiaire E obtenu, de formule : 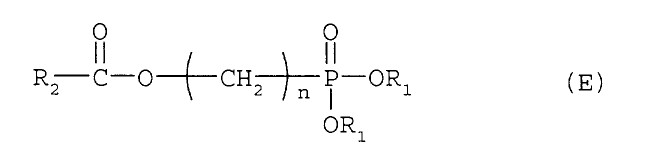 dans laquelle
R₁, R₂ ont les significations données ci-dessus
n vaut 2 ou 3 ;
pour aboutir à l'alcool dialkylphosphoné B.

Pour obtenir un alcool dialkylphosphoné B dans lequel n vaut 1, on fait réagir de façon classique un phosphite d'alkyle C avec du formaldéhyde.

### 2) Réaction du (méth)acrylate d'alkyle A avec l'alcool dialkylphosphoné B

Cette réaction est une réaction de transestérification. Elle est donc mise en oeuvre dans les conditions habituelles des réactions de transestérification bien connues de l'homme du métier.

Les températures mises en oeuvre sont en général de 85°C à 130°C, de préférence de 95°C à 120°C.

Le ratio des réactifs, à savoir ester (meth)acrylique A:alcool phosphoné B varie dans de grandes limites, par exemple entre 1,4 et 5, de préférence entre 2 et 4.

De préférence, la réaction s'effectue en présence d'un catalyseur, en une quantité comprise entre 10⁻⁴ et 10⁻¹, de préférence entre 5.10⁻⁴ et 5.10⁻² mol/mol d'alcool.

Comme catalyseur, on utilise préférentiellement l'acétyl acétonate de zirconium.

### MONOMERE (METH)ACRYLATE DE (DIALKYLPHOSPHONO)ALKYLE

Le produit final, à savoir, le monomère (méth)acrylate de (dialkylphosphono)alkyle peut servir à la préparation de liants textiles possèdant un caractère ignifugeant.

Son insensiblité à l'hydrolyse peut aussi être mise à profit en réalisant des dispersions aqueuses utiles comme liants de peintures pour métaux.

Il peut aussi être utilisé pour préparer des polymères de faibles masses que l'on peut mettre en oeuvre comme dispersants de charges.

Il trouve des applications particulièrement intéressantes dans la fabrication des latex, car il confère à ces derniers des propriétés d'adhésion sur les métaux ou des propriétés anti-corrosion, alors que les propriétés anti-corrosion sont normalement obtenues au moyen d'atomes de chrome.

### Exemple

L'exemple suivant est donné à titre uniquement illustratif et n'a aucun caractère limitatif.

### Synthèse du méthacrylate de diméthylphosphono-éthyle

Dans un réacteur en verre double enveloppe de 0,5 l équipé d'une agitation mécanique (hélice 4 pales) à vitesse variable, d'une sonde pour la mesure de la température, d'une canne plongeante pour l'introduction d'air et surmonté d'une colonne à distiller adiabatique (de type Vigreux - 3 plateaux théoriques) , cette colonne étant elle-même surmontée d'une tête de reflux, on introduit 154,1 g (1 mole) de diméthyl phosphono éthanol, 400 g (4 moles) de méthacrylate de méthyle, 0,1333 g de stabilisant EMHQ et 4,87 g de Zr(acac)₄.

On chauffe le réacteur au moyen d'un bain d'huile thermostaté.

L'ensemble fonctionne sous pression réduite grâce au vide réalisé par une pompe à palettes.

Un thermomètre mesure la température de tête de colonne.

Un dispositif approprié permet de piloter le rapport R/S (relux/soutirage) en tête de colonne.

Les différentes fractions sont recueillies dans une recette de 250 ml.

Dans un premier temps, on sèche les réactifs dans les conditions suivantes :
Température dans le réacteur : 60°C
Température en tête de colonne : 60°C
Pression : 200 mbars
R/S : 5/1
Durée de l'opération : 15 minutes
Masse soutirée : 100 g

Dans un second temps, on procède à la réaction proprement dite dans les conditions suivantes :
Température dans le réacteur : 110°C maximum
Température en tête de colonne : 35-60°C
Pression : en croissance de 350 à 780 mbars
R/S : 5/1
Durée de l'opération : 4 heures
Masse soutirée : 110,1 g

Dans un troisième temps, on élimine l'excès de méthacrylate de méthyle dans les conditions suivantes :
Température dans le réacteur : 110°C maximum
Pression : en décroissance de 780 à 50 mbars
Durée de l'opération : 1 heures
Masse soutirée : 122 g

Le rendement global est de 94% en méthacrylate de diméthylphosphono-éthyle qui se présente sous forme de liquide jaune limpide dont la pureté déterminée par RMN est de 95%.

## Revendications

1. Procédé de préparation d'un (méth)acrylate de (dialkylphosphono)alkyle répondant à la formule : 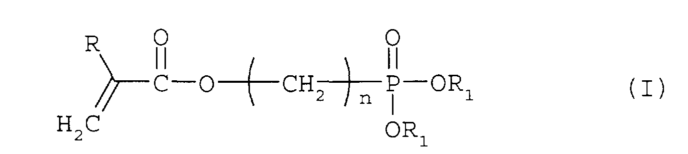 dans laquelle :
R est un hydrogène ou un groupement méthyle
R₁ représente un groupement alkyle ayant de 1 à 6 atomes de carbone
n est un entier de 1 à 3 ;
comprenant la réaction d'un (méth)acrylate d'alkyle A de formule 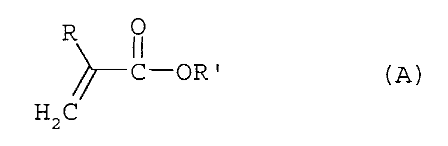 dans laquelle :
R est un atome d'hygrogène ou un groupement méthyle ;
R' est un groupement alkyle ayant de 1 à 4 atomes de carbone
avec un alcool dialkylphosphoné B de formule 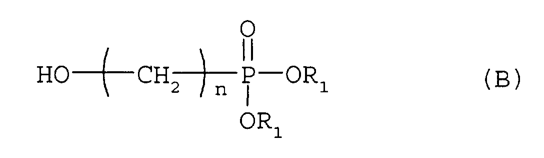 dans laquelle R₁ et n ont les significations données ci-dessus,
en présence d'un catalyseur comprenant de l'acétyl acétonate de zirconium.

2. Procédé selon la revendication 1, dans lequel l'alcool dialkylphosphoné B dans lequel n est égal à 1 est préparé par réaction d'un phosphite d'alkyle C de formule 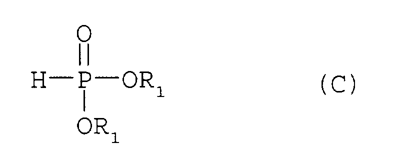 dans laquelle R₁ a la même signification que ci-dessus ;
avec du formaldéhyde.

3. Procédé selon la revendication 1 ou la revendication 2, dans lequel R₁ comporte de 1 à 3 atomes de carbone.

4. Procédé selon l'une des revendications précédentes, dans lequel R est le groupement méthyle.

5. Procédé selon l'une des revendications précédentes, dans lequel R' est le groupement méthyle ou éthyle.

6. Procédé selon l'une des revendications précédentes, dans lequel la réaction du (méth)acrylate d'alkyle A avec l'alcool dialkylphosphoné B s'effectue à une température de 85°C à 130°C, de préférence de 95°C à 120°C.

7. Procédé selon l'une des revendications précédentes, dans lequel la réaction du (méth)acrylate d'alkyle A avec l'alcool dialkylphosphoné B s'effectue selon un ratio ester (meth)acrylique A:alcool phosphoné B entre 1,4 et 5 et de préférence entre 2 et 4.
